**Europäisches Patentamt**

**European Patent Office**

**Office européen des brevets**

(19)

(11) Numéro de publication : **0 311 481 B1**

(12)

# FASCICULE DE BREVET EUROPEEN

(45) Date de publication du fascicule du brevet :
**29.07.92 Bulletin 92/31**

(51) Int. Cl.$^5$ : **G05G 1/06,** B60K 20/04

(21) Numéro de dépôt : **88402423.3**

(22) Date de dépôt : **26.09.88**

(54) **Levier de changement de vitesses pour véhicule automobile.**

(30) Priorité : **09.10.87 FR 8714000**

(43) Date de publication de la demande :
**12.04.89 Bulletin 89/15**

(45) Mention de la délivrance du brevet :
**29.07.92 Bulletin 92/31**

(84) Etats contractants désignés :
**DE GB IT**

(56) Documents cités :
**US-A- 1 601 824**
**US-A- 1 848 526**
**US-A- 2 422 830**
**US-A- 2 440 170**
**US-A- 3 484 808**
**US-A- 4 043 220**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lescaut, Emmanuel**
**18, rue des Cols Verts**
**F-78340 Les Clayes-sous-Bois (FR)**

(74) Mandataire : **Kohn, Philippe et al**
**c/o CABINET LAVOIX 2, place d'Estienne**
**d'Orves**
**F-75441 Paris Cédex 09 (FR)**

EP 0 311 481 B1

# Description

La présente invention a pour objet un levier de changement de vitesses pour véhicule automobile du type comportant un pommeau monté excentré sur l'extrémité libre d'une tige de levier.

De nombreux perfectionnements ont été apportés à la conception des habitacles de véhicules automobiles en vue d'en améliorer l'ergonomie et notamment de les adapter à des conducteurs de tailles différentes.

Dans ce but il a déjà été proposé de prévoir des sièges de dimensions et de positions réglables ainsi que par exemple des dispositifs permettant de régler en hauteur et en longueur la colonne de direction du véhicule.

On constate toutefois qu'il est extrêmement difficile de déterminer une position moyenne du levier de changement de vitesses à l'intérieur de l'habitacle du véhicule qui corresponde à des conditions ergonomiques d'utilisation tant pour un conducteur de grande taille que pour un conducteur de petite taille.

L'invention a pour but de permettre au conducteur de modifier la position dans l'espace du pommeau du changement de vitesses par des moyens simples et peu coûteux.

Dans ce but l'invention propose un levier de changement de vitesses pour véhicule automobile du type décrit et représenté dans le document US-A-4.043.220 et comportant un pommeau monté excentré sur l'extrémité libre d'une tige de levier, des moyens d'indexation en rotation du pommeau par rapport à la tige dans au moins deux positions angulaires relatives distinctes, et des moyens de verrouillage en position du pommeau sur la tige.

Afin de permettre une modification aisée et rapide de la position du pommeau, notamment en évitant à l'utilisateur d'avoir à désserrer une liaison filetée, le levier selon l'invention est caractérisé en ce que les moyens de verrouillage comportent un ressort de verrouillage et un organe de commande du déverrouillage qui est en appui sur le ressort de verrouillage.

Selon d'autres caractéristiques de l'invention :
– les moyens de verrouillage sont agencés à l'intérieur d'une cavité du pommeau ;
– les moyens d'indexation en rotation sont constitués par une première série de cannelures formées sur la tige qui coopèrent avec une seconde série de cannelures correspondantes formées sur le pommeau ;
– les cannelures peuvent s'étendre radialement ;
– les moyens de verrouillage comportent un manchon monté coulissant à l'intérieur d'une cavité axiale cylindrique du pommeau par rapport auquel il est immobilisé en rotation, et qui est monté libre en en rotation et en coulissement sur la tige de levier, une seconde série de cannelures radiales étant formées sur la face interne d'un fond du manchon pour coopérer avec une première série de cannelures radiales formées sur un épaulement radial de la tige du levier sous l'action d'un ressort de compression prenant appui d'une part sur le fond de la cavité et d'autre part sur la face externe du fond du manchon, l'extrémité libre de la tige comporte des moyens d'immobilisation axiale du pommeau sur celle-ci, le manchon comportant une patte de commande des moyens de verrouillage accessible depuis l'extérieur du pommeau ;
– l'extrémité libre de la tige comporte des moyens d'immobilisation axiale du pommeau sur celle-ci, et les moyens d'indexation en rotation et de verrouillage sont constitués par un levier du premier type, monté pivotant à l'intérieur de la cavité du pommeau autour d'un axe perpendiculaire à l'axe de la tige, dont une première extrémité est reçue dans une rainure diamétrale formée sur la face radiale d'extrémité libre de la tige du levier, et dont l'autre extrémité est accessible à l'intérieur de la cavité pour provoquer le dégagement de la première extrémité hors de la rainure à l'encontre de l'effort exercé par un ressort de verrouillage ;
– le pommeau comporte une pastille amovible pourvue d'une inscription visible par le conducteur et qui est susceptible d'occuper au moins deux positions relatives distinctes par rapport au pommeau.

D'autres caractéristiques et avantages de l'invention apparaîtront à la lecture de la description détaillée qui va suivre pour la compréhension de laquelle on se reportera aux dessins annexés dans lesquels :
– La figure 1 est une vue en perspective de la partie supérieure d'un levier de changement de vitesses selon l'invention qui est représentée dans deux positions angulaires distinctes ;
– la figure 2 est une vue schématique illustrant l'adaptation des deux positions relatives du pommeau du levier de changement de vitesses pour deux conducteurs de tailles différentes ;
– la figure 3 est une vue en coupe axiale d'un mode de réalisation d'un levier de changement de vitesses ;
– la figure 4 est une vue en perspective de la partie supérieure de la tige de levier de la figure 3 ;
– la figure 5 est une vue en coupe axiale d'un autre mode de réalisation d'un levier de changement de vitesses ; et
– la figure 6 est une vue en perspective montrant la coopération de la partie supérieure de la tige du levier de la figure 5 avec un organe de verrouillage intégré au pommeau.

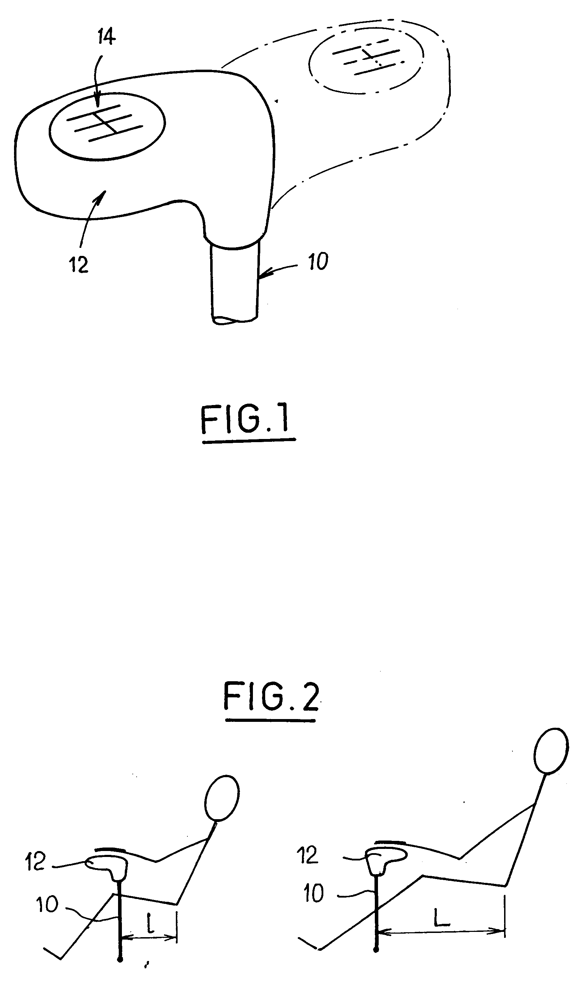

On a représenté à la figure 1 une tige 10 d'un levier de changement de vitesses sur laquelle est monté de manière excentrée un pommeau 12. Une seconde position angulaire relative du pommeau 12 par rapport à la tige 10 est représentée en silhouette à la figure 1.

Le pommeau 12 comporte à sa partie supérieure une pastille amovible 11, sur laquelle figure une inscription correspondant à la grille de changement de vitesses du véhicule, qui peut occuper deux positions par rapport au pommeau 12 qui correspondent aux deux positions angulaires décalées à 180° du pommeau 12 par rapport à la tige 10.

Les deux positions angulaires représentées à la figure 1 correspondent à l'agencement du levier de changement de vitesses à l'intérieur d'un véhicule automobile et à son adaptation à deux conducteurs de tailles différentes tels que ceux représentés à la figure 2. Le conducteur de gauche, de petite taille, est assis à une distance "l" du levier de changement de vitesses nettement inférieure à la distance "L" du conducteur de grande taille de droite. Comme on peut le constater à la figure 2, l'inversion de la position du pommeau 12 par rapport à la tige 10 permet d'adapter la position ergonomique du pommeau par rapport au conducteur et de situer le pommeau dans l'habitacle dans une zone de préhension idéale pour chacun des deux conducteurs.

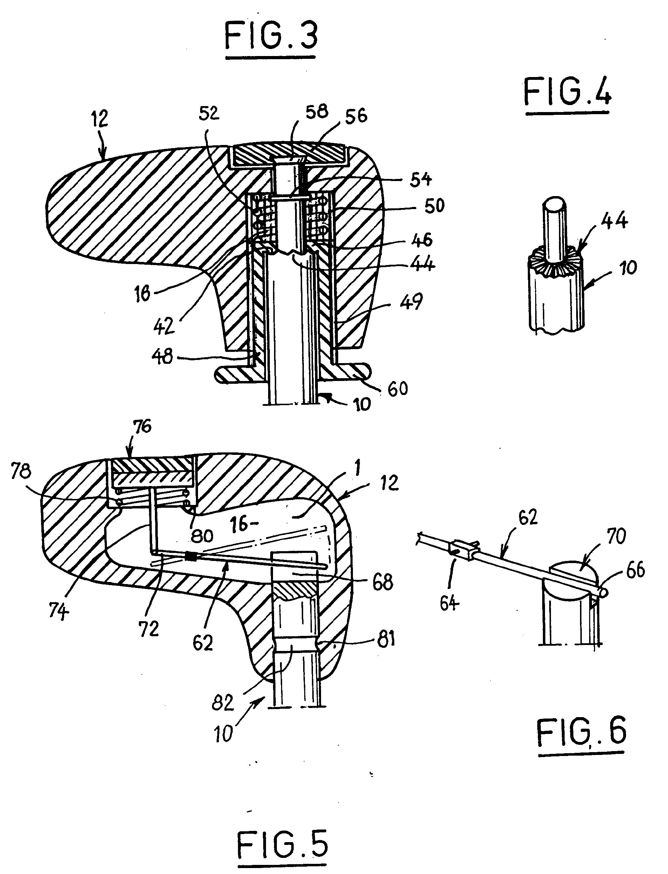

Dans le premier mode de réalisation du levier de changement de vitesses représenté en coupe à la figure 3, le pommeau 12 est un pommeau en matière plastique comportant une cavité centrale 16.

Les moyens d'indexation en position angulaire sont constitués par une première série de cannelures radiales 44 formées sur un épaulement radial de la partie supérieure de la tige de levier 10 et coopérant avec une seconde série de cannelures correspondantes 42 formées sur la face interne du fond 46 d'un manchon cylindrique 48.

Le manchon cylindrique 48 est enfilé sur le corps de la tige 10 sur lequel il est monté libre en rotation et par rapport auquel il peut coulisser axialement. Le manchon 48 comporte des cannelures axiales externes 49 qui coopèrent avec des cannelures axiales internes correspondantes 50 formées dans la cavité cylindrique 16 du pommeau 12. Le manchon 48 est ainsi immobilisé en rotation par rapport au pommeau 12 mais est libre de coulisser axialement par rapport à celui-ci.

Le pommeau 12 reçoit un ressort de compression 52 qui prend appui sur la face externe du fond 46 du manchon 48 et contre le fond supérieur de la cavité 16. Le pommeau 12 est immobilisé axialement par rapport à la tige 10 grâce à un épaulement radial 54 de cette dernière qui coopère avec le fond de la cavité 16 et grâce à une pastille 56 qui est emboîtée élastiquement sur une tête élargie 58 de l'extrémité libre de la tige 10.

Le manchon 48 comporte enfin une patte radiale de commande 60 venue de matière avec celui-ci et qui fait saillie à sa partie inférieure pour être accessible depuis l'extérieur de la cavité 16 du pommeau 12.

Les moyens d'indexation et de verrouillage du pommeau représenté à la figure 3 fonctionnent de la manière suivante :

Dans la position illustrée à la figure 2, le ressort de compression 52, qui fait fonction de ressort de verrouillage, sollicite les deux jeux de cannelures radiales en coopération l'un contre l'autre et s'oppose ainsi à tout mouvement de rotation du pommeau 12 par rapport à la tige 10.

Si le conducteur désire modifier la position angulaire du pommeau 12 par rapport à la tige 10, il agit sur la patte radiale de commande 60 en la déplaçant verticalement vers le haut, en considérant la figure 3, de manière à provoquer un éloignement réciproque des deux séries de cannelures 42 et 44.

Dans cette position le pommeau 12 est libre de tourner par rapport à la tige 10 pour venir occuper une autre position angulaire dans laquelle le conducteur n'a plus qu'à relâcher la patte de commande 60 qui revient dans sa position axiale illustrée à la figure 3 sous l'action du ressort de verrouillage 52. La pastille 56, portant l'inscription de la grille des vitesses, reste immobile lors de la rotation du pommeau.

Dans un autre mode de réalisation représenté aux figures 5 et 6, les moyens d'indexation en rotation et de verrouillage du pommeau 12 sur la tige 10 sont constitués par un levier du premier type 62 monté pivotant autour d'un axe 64 dans la cavité 16 du pommeau 12. L'axe 64 s'étend selon une direction perpendiculaire à l'axe de la tige 10 de façon à ce qu'une première extrémité 66 du levier 62 soit engagée dans une rainure diamétrale 68 formée sur la face radiale d'extrémité 70 de la tige 10.

La seconde extrémité 72 du levier 62 est reliée, par une tige 74, à un bouton 76 pour la commande du déverrouillage du pommeau 12.

La première extrémité 66 du levier 62 est sollicitée en engagement dans la rainure 68 par un ressort de verrouillage 78. Le ressort 78 est un ressort de compression agencé entre la face inférieure du bouton 76 et un épaulement radial 80 de la cavité 16.

Le positionnement axial du pommeau 12 par rapport à la tige 10, et son maintien dans cette position peuvent par exemple être assurés au moyen d'un renflement 81 de l'alésage cylindrique inférieur de la cavité 16 qui coopère avec une gorge radiale 82 de la tige 10.

**Revendications**

1. Levier de changement de vitesses pour véhicule automobile du type comportant un pommeau (12) monté excentré sur l'extrémité libre d'une tige de levier (10), des moyens d'indexation en rotation (42, 44 - 62, 70) du pommeau par rapport à la tige dans au moins deux positions angulaires relatives distinctes, et des moyens de verrouillage en position (54, 56, 58 - 80, 82) du pommeau (12) sur la tige (10), caractérisé en ce que les moyens de verrouillage comportent un ressort de verrouillage (52, 78) et un organe de commande du déverrouillage (48, 60, 76) qui est en appui sur le ressort de verrouillage.

2. Levier de changement de vitesses selon la revendication 1 caractérisé en ce que les moyens de verrouillage sont agencés à l'intérieur d'une cavité (16) du pommeau.

3. Levier de changement de vitesses selon l'une quelconque des revendications précédentes caractérisé en ce que les moyens d'indexation en rotation sont constitués par une première série de cannelures (44) formées sur la tige qui coopèrent avec une seconde série de cannelures (42) correspondantes formées sur le pommeau.

4. Levier de changement de vitesses selon la revendication 3 caractérisé en ce que lesdites cannelures (42, 44) s'étendent radialement.

5. Levier de changement de vitesses selon la revendication 4 caractérisé en ce que les moyens de verrouillage comportent un manchon (48) monté coulissant à l'intérieur d'une cavité axiale cylindrique (16) du pommeau par rapport auquel il est immobilisé en rotation et qui est monté libre en rotation et en coulissement sur la tige de levier (10), la seconde série de cannelures radiales (42) étant formée sur la face interne d'un fond (46) du manchon (48) pour coopérer avec la première série de cannelures radiales (44) formées sur un épaulement radial de la tige, sous l'action dudit ressort de verrouillage qui est un ressort de compression (52) prenant appui d'une part sur le fond de la cavité (16) et d'autre part sur la face externe du fond (46) du manchon (48), en ce que l'extrémité libre de la tige comporte des moyens (54, 56, 58) d'immobilisation axiale du pommeau sur celle-ci, et en ce que le manchon comporte une patte (60) de commande du déverrouillage des moyens de verrouillage accessible depuis l'extérieur du pommeau.

6. Levier de changement de vitesses selon la revendication 2 caractérisé en ce que l'extrémité libre de la tige comporte des moyens (80, 82) d'immobilisation axiale du pommeau sur celle-ci, et en ce que les moyens d'indexation en rotation et de verrouillage sont constitués par un levier (62) du premier type, monté pivotant à l'intérieur de la cavité (16) du pommeau autour d'un axe (64) perpendiculaire à l'axe de la tige, dont une première extrémité (66) est reçue dans une rainure diamétrale (68) formée sur la face radiale d'extrémité libre (70) de la tige du levier, et dont l'autre extrémité (72) est accessible à l'intérieur de la cavité par ledit organe de commande du déverrouillage pour provoquer le dégagement de la première extrémité hors de la rainure à l'encontre de l'effort exercé par ledit ressort de verrouillage (78).

7. Levier de changement de vitesses selon l'une quelconque des revendications précédentes caractérisé en ce que le pommeau comporte une pastille amovible (14) pourvue d'une inscription visible par le conducteur et qui est susceptible d'occuper au moins deux positions relatives distinctes par rapport au pommeau.

**Patentansprüche**

1. Gangschaltungshebel für Kraftfahrzeuge des Typs, welcher einen Schaltknopf (12), der exzentrisch auf dem freien äußeren Ende einer Hebelstange (10) angebracht ist, Indexeinrichtungen für die Drehung (42, 44 - 62, 70) des Schaltknopfes in bezug auf die Stange in wenigstens zwei voneinander unterschiedliche Winkelpositionen und Positions-Verriegelungseinrichtungen (54, 56, 58 - 80, 82) des Schaltknopfes (12) auf dem Hebel (10) umfaßt, dadurch gekennzeichnet, daß die Verriegelungseinrichtungen eine Verriegelungsfeder (52, 78) und ein Steuerelement für die Entriegelung (48, 60, 76), das auf der Verriegelungsfeder liegt, umfassen.

2. Gangschaltungshebel nach Anspruch 1, dadurch gekennzeichnet, daß die Verriegelungseinrichtungen im Inneren eines Hohlraumes (16) des Schaltknopfes vorliegen.

3. Gangschaltungshebel nach einem der vorangehenden Ansprüche, dadurch gekennzeichnet, daß die Indexeinrichtungen für die Drehung aus einer ersten Anzahl von auf der Stange ausgebildeten Riffelungen (44), die mit einer zweiten Anzahl von Riffelungen (42) zusammenwirken, welche entsprechend auf dem Schaltknopf ausgebildet sind, aufgebaut sind.

4. Gangschaltungshebel nach Anspruch 3, dadurch gekennzeichnet, daß die Riffelungen (42, 44) sich radial erstrecken.

5. Gangschaltungshebel nach Anspruch 4, dadurch gekennzeichnet, daß die Verriegelungseinrichtungen eine Muffe (48) umfassen, die im Inneren eines axialen zylindrischen Hohlraumes (16) des Schaltknopfes drehbar angebracht sind, in bezug auf den sie drehunbeweglich ist und die frei drehbar und gleitbar auf der Hebelstange (10) angebracht ist, wobei die zweite Anzahl von radialen Riffelungen (42) auf der Innenfläche eines Bodens (46) der Muffe (48) ausgebildet ist, um mit der ersten Anzahl radialer Riffelungen (44) zusammenzuwirken, die auf einer radialen Schulter der Stange ausgebildet sind, unter der Wirkung der Verriegelungsfeder, welche eine Druckfeder (52) ist, die einerseits auf dem Boden des Hohlraumes (16) und andererseits auf der Außenfläche des Bodens (46) der Muffe (48) liegt, daß das freie äußere Ende der Stange Einrichtungen (54, 56, 58) für das axiale Unbeweglichhalten des Schaltknopfes auf dieser umfaßt und daß die Muffe eine Steuerklaue (16) für das Entriegeln der Verriegelungsein-

richtungen umfaßt, die vom Äußeren des Schaltknopfes her zugänglich ist.

6. Gangschaltungshebel nach Anspruch 2, dadurch gekennzeichnet, daß das freie äußere Ende der Stange Einrichtungen (80, 82) für das axiale Unbeweglichhalten des Schaltknopfes auf dieser umfaßt und daß die Einrichtungen für die Indexierung der Drehung und für die Verriegelung durch einen Hebel (62) des ersten Types aufgebaut sind, der im Inneren des Hohlraumes (16) des Schaltknopfes um eine Achse (64) schwenkbar angebracht ist, die senkrecht zur Achse der Stange ist, dessen erstes äußeres Ende (66) in einer diametralen Rille (68) aufgenommen ist, die auf der radialen Fläche des äußeren freien Endes (70) der Hebelstange ausgebildet ist, und dessen anderes äußeres Ende (72) im Inneren des Hohlraumes durch das Steuerelement für die Entriegelung zugänglich ist, um das Freigeben des ersten äußeren Endes aus der Rille gegen die Wirkung, die durch die Verriegelungsfeder (78) ausgeübt wird, einzuleiten.

7. Gangschaltungshebel nach einem der vorangehenden Ansprüche, dadurch gekennzeichnet, daß der Schaltknopf eine verstellbare Plakette (14) umfaßt, die für eine für den Fahrer sichtbare Beschriftung vorgesehen ist und die geeignet ist, wenigstens zwei relativ unterschiedliche Positionen in bezug auf den Schaltknopf einzunehmen.

## Claims

1. Gear shift lever for a motor vehicle, of the type comprising a knob (12) mounted off-centre on the free end of a lever shaft (10), indexation means (42, 44 - 62, 70) for rotation of the knob relative to the shaft in at least two distinct relative angular positions, and means (54, 56, 58 - 80, 82) for locking the knob (12) in position on the shaft (10), characterised in that the locking means comprise a locking spring (52, 78) and an unlocking control element (48, 60, 76) which bears on the locking spring.

2. Gear shift lever according to claim 1, characterised in that the locking means are arranged inside a cavity (16) of the knob.

3. Gear shift lever according to any one of the preceding claims, characterised in that the indexation means for rotation are constituted by a first set of channel toothing (44) formed on the shaft, which first set cooperates with a second set of corresponding channel toothing (42) formed on the knob.

4. Gear shift lever according to claim 3, characterised in that the said channel toothing (42, 44) extends radially.

5. Gear shift lever according to claim 4, characterised in that the locking means comprise a sleeve (48) mounted for sliding inside an axial cylindrical cavity (16) of the knob, relative to which knob the said sleeve is immobilized for rotation, and which sleeve is mounted freely for rotation and for sliding on the lever shaft (10), the second set of radial channel toothing (42) being formed on the inner surface of an upper end (46) of the sleeve (48) for cooperation with the first set of radial channel toothing (44) formed on a radial shoulder of the shaft, under the action of the said locking spring, which is a compression spring (52) bearing, on the one hand, on the upper end of the cavity (16) and, on the other hand, on the outer surface of the upper end (46) of the sleeve (48), and in that the free end of the shaft comprises means (54, 56, 58) for the axial immobilization of the knob on this shaft, and in that the sleeve comprises a lug (60) for controlling the unlocking of the locking means, which lug is accessible from the outside of the knob.

6. Gear shift lever according to claim 2, characterised in that the free end of the shaft comprises means (80, 82) for the axial immobilization of the knob on this shaft, and in that the indexation means for rotation and for locking are constituted by a lever (62) of the first type, mounted in a pivoting manner inside the cavity (16) of the knob around an axis (64) which is perpendicular to the axis of the shaft, a first end (66) of which is received in a diametric groove (68) formed on the free radial end surface (70) of the shaft of the lever, and the other end (72) of which is accessible from inside the cavity by way of the said unlocking control element in order to cause the disengagement of the first end from the groove, against the force exerted by the said locking spring (78).

7. Gear shift lever according to any one of the preceding claims, characterised in that the knob comprises a movable pellet (14) provided with an inscription which can be seen by the driver, the pellet being capable of occupying at least two distinct relative positions in relation to the knob.

## FIG.1

## FIG.2

# FIG.3

# FIG.4

# FIG.5

# FIG.6